# EUROPEAN PATENT APPLICATION

(11) **EP 4 808 270 A2**
(43) Date of publication of application: **16.09.2026**
(21) Application number: 26195827.6
(22) Date of filing: 06.08.2021
(51) Int. Cl.: H04W 76/20

(54) **MULTI-CARRIER COMMUNICATION METHOD AND APPARATUS FOR SIDELINK**

(62) Document number(s) of the earlier application(s) in accordance with Art. 76 EPC: 21952381.8 / 4 383 882
(71) Applicant: GUANGDONG OPPO MOBILE TELECOMMUNICATIONS CORP., LTD., Dongguan, Guangdong 523860 (CN)
(72) Inventor: LU, Qianxi, Dongguan, Guangdong, 523860 (CN); ZHANG, Boyuan, Dongguan, Guangdong, 523860 (CN); LENG, Bingxue, Dongguan, Guangdong (CN)
(74) Representative: Penza, Giancarlo

(57) **Abstract**

A multi-carrier communication method and apparatus for a sidelink. The method comprises: a first terminal device determining a first carrier set according to first information, wherein the first carrier set is a subset of a second carrier set for sidelink communication; and the first terminal device performing an operation on a carrier in the first carrier set. In the embodiments of the present application, a first carrier set is selected, by means of screening and first information, from a carrier set that can be used by a first terminal device to perform sidelink transmission, and an operation is performed on a carrier in the first carrier set. In this way, the number of carriers needing to be monitored during a working process of the first terminal device is reduced, thereby reducing the power consumption of the first terminal device.

## Description

### TECHNICAL FIELD

The present disclosure relates to the technical field of communications and more particularly to the technical field of multi-carrier communication in a sidelink.

### BACKGROUND

In the existing systems supporting multi-carrier communication, such as the vehicle to everything (V2X) system in the long term evolution (LTE) technology, the different carriers are equal in status to each other in the system. The users process the available carriers separately, which leads to too many carriers to be detected by the users, resulting in increased power consumption.

### SUMMARY

The present disclosure provides a multi-carrier communication method for a sidelink and an apparatus thereof, which are capable of reducing power consumption of a terminal device.

The present disclosure provides the following technical solutions.

In an aspect, there is provided a multi-carrier communication method for a sidelink, which includes the following operations. A first terminal device determines a first carrier set based on first information. The first carrier set is a subset of a second carrier set for sidelink communication. The first terminal device performs an operation on a carrier in the first carrier set.

In another aspect, there is provided a multi-carrier communication method, which includes the following operations. A correspondence between first information and a first carrier set is configured for a first terminal device, causing the first terminal device to determine the first carrier set based on the first information and to perform an operation on a carrier in the first carrier set. The first carrier set is a subset of a second carrier set for sidelink communication.

In another aspect, there is provided a multi-carrier communication apparatus for a sidelink, which includes a determining unit and a processing unit. The determining unit is configured to determine a first carrier set based on first information. The first carrier set is a subset of a second carrier set for sidelink communication. The processing unit is configured to perform an operation a carrier in the first carrier set.

In another aspect, there is provided a multi-carrier communication apparatus for a sidelink, which includes a configuration unit. The configuration unit is configured to configure for a first terminal device a correspondence between first information and a first carrier set, causing the first terminal device to determine the first carrier set based on the first information and to perform an operation on a carrier in the first carrier set. The first carrier set is a subset of a second carrier set for sidelink communication.

In another aspect, there is provided a multi-carrier communication apparatus for a sidelink, which includes a processor and a memory. The processor invokes a program in the memory to perform the multi-carrier communication method for the sidelink according to any one of the embodiments of the present disclosure.

In yet another aspect, there is provided a chip including a processor for invoking and running a computer program from a memory, to cause a device installed with the chip to perform the multi-carrier communication method for the sidelink according to any one of the embodiments of the present disclosure.

In yet another aspect, there is provided a computer-readable storage medium having stored thereon a program for an uplink transmission method that, when executed by a processor, performs the multi-carrier communication method for the sidelink of any one of the embodiments of the present disclosure.

In yet another aspect, there is provided a computer program product, the computer program product is stored in a non-transitory computer readable storage medium and performs, when executed, the multi-carrier communication method for the sidelink according to any one of the embodiments of the present disclosure.

The present disclosure has the beneficial effect that the first carrier set is selected, through the first information, from a carrier set available for the first terminal device to perform a sidelink transmission, and the operation is performed only on the carrier(s) in the first carrier set. Therefore, the number of carriers to be monitored in the working process of the first terminal device is reduced, thereby reducing the power consumption of the first terminal device.

### BRIEF DESCRIPTION OF THE DRAWINGS

FIG. 1A and FIG. 1B are system architecture diagrams of the application of the embodiment of the present disclosure.
FIG. 2 illustrates a multi-carrier communication method for a sidelink according to the first embodiment of the present disclosure.
FIG. 3 is a diagram of a structure of a multi-carrier communication apparatus for a sidelink according to the second embodiment of the present disclosure.
FIG. 4 is a diagram of a structure of a multi-carrier communication apparatus for a sidelink according to the third embodiment of the present disclosure.
FIG. 5 is a diagram of a structure of a multi-carrier communication apparatus for a sidelink according to the fourth embodiment of the present disclosure.

### DETAILED DESCRIPTION

In order to make the object, technical solutions and advantages of the present disclosure more apparent, the present disclosure will be described in further detail in conjunction with the accompanying drawings and embodiments. It should be understood that the embodiments described herein are for illustrative purposes only and are not intended to be limiting. However, the present disclosure may be embodied in a number of different forms and is not limited to the embodiments described herein. Rather, these embodiments are provided to enable a more thorough and comprehensive understanding of the disclosure of the present invention.

Unless otherwise defined, all technical and scientific terms used herein have the same meaning as would normally be understood by those skilled in the art of the present disclosure. Terms used herein in the specification of the present disclosure are for the purpose of describing specific embodiments only and are not intended to limit the present disclosure. The term "and/or" as used herein includes any and all combinations of one or more related listed items.

The embodiments of the present disclosure can be applied to various communication systems, such as, global system of mobile communication (GSM) systems, code division multiple access (CDMA) systems, wideband code division multiple access (WCDMA) systems, general packet radio service (GPRS) systems, long term evolution (LTE) systems, advanced long term evolution (LTE-A) systems, new radio (NR) systems, evolution systems of NR systems, LTE-based access to unlicensed spectrum (LTE-U) systems, NR-based access to unlicensed spectrum (NR-U) systems, universal mobile telecommunication systems (UMTS), wireless local area networks (WLAN), wireless fidelity (Wi-Fi), next generation communication systems or other communication systems.

Alternatively, the communication system in the embodiments of the present disclosure can be applied to a carrier aggregation (CA) scenario, a dual connectivity (DC) scenario, and a standalone (SA) network distribution scenario.

The device-to-device (D2D) and vehicle to everything (V2X) systems belong to the side link (SL) transmission technology, which is different from the traditional cellular system in which communication data is received or sent through the base station. The D2D system or the V2X system uses the direct terminal-to-terminal communication method.

In LTE, the 3rd generation partnership project (3GPP) defines two transmission modes of the sidelink: the Mode A and the Mode B.

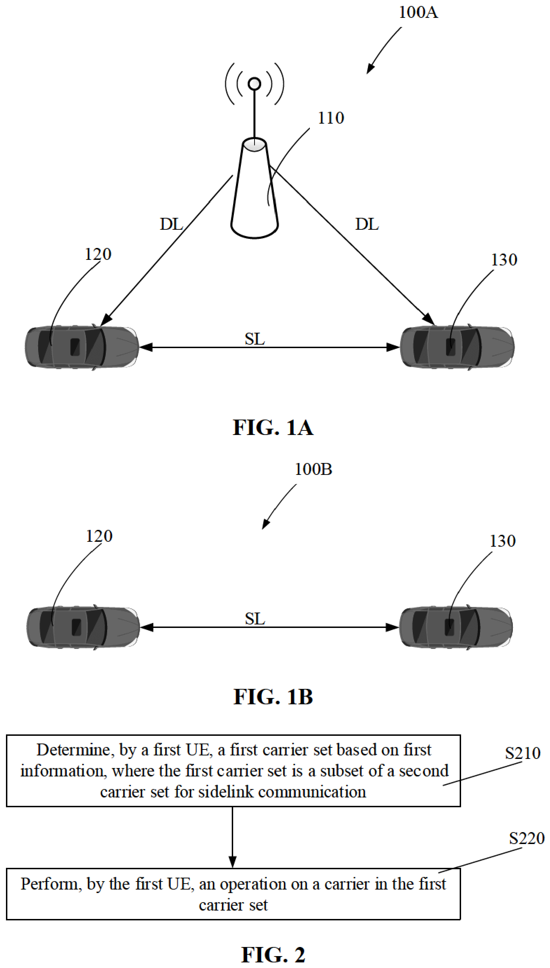

FIG. 1A illustrates a wireless communication system 100A, i.e., the Mode A, applied in the embodiments of the present disclosure. The wireless communication system 100 includes a network device 110 and terminal devices 120 and 130. The transmission resources of the terminal devices 120 and 130 are allocated by the network device 110, and the terminal devices 120 and 130 perform data transmission on the sidelink based on the resources allocated by the network device 110. The network device 110 may allocate resources to the terminal devices 120 and 130 for a single transmission, and may also allocate resources to the terminal devices 120 and 130 for a semi-static transmission.

FIG. 1B illustrates another wireless communication system 100B, i.e., the Mode B, applied in the embodiments of the present disclosure. The wireless communication system 100 includes terminal devices 120 and 130. The terminal devices 120 and 130 select a resource from a resource pool for data transmission on the sidelink.

Alternatively, the wireless communication system 100 may include multiple network devices and other numbers of terminal devices may be included within the coverage area of each network device, which is not limited by the embodiments of the present disclosure.

In NR, D2D is studied in different stages. In Rel-12/13, the D2D of the proximity based service (ProSe) scenario is studied, which mainly aims at the public security business. In Rel-14/15, the vehicle-to-vehicle communication scenario of the V2X is studied, which mainly aims at the relatively high-speed mobile vehicle-to-vehicle and vehicle-to-person communication business. In Rel-14, the scenario of wearable devices (further enhancements to LTE device to device, FeD2D) accessing the network through mobile phones is studied, which mainly aims at the scenario of low mobile speed and low power access.

On the basis of LTE V2X, NR V2X is no longer limited to broadcast scenarios, but is further extended to unicast and multicast scenarios, and the application of the V2X in these scenarios is studied. Similar to the LTE V2X, the NR V2X also defines two resource license modes, Mode A and Mode B. Furthermore, users may be in a mixed mode, that is, the users can use both the Mode A for resource acquisition and the Mode B for resource acquisition. The resource acquisition is indicated by the sidelink license, that is, the sidelink license indicates the time-frequency position of the corresponding physical sidelink control channel (PSCCH) resource and the physical sidelink shared channel (PSSCH) resource. Unlike the LTE V2X, except for the UE-initiated hybrid automatic repeat request (HARQ) retransmission without feedback, the NR V2X introduces feedback-based HARQ retransmission, which is not limited to unicast communication, but also includes multicast communication.

The network device 110 may provide communication coverage for a particular geographical area and may communicate with user equipment (UE) located within the coverage area. Alternatively, the network device 100 may be a satellite, a base transceiver station (BTS) in a GSM system or a CDMA system, a base station (NodeB, NB) in a WCDMA system, an evolutional node B (eNB or eNodeB) in an LTE system, or a wireless controller in a cloud radio access network (CRAN), or the network device may be a relay station, an access point, a vehicle-mounted device, a wearable device, a network-side device in a 5G network, or a network device in a future evolved public land mobile network (PLMN), etc.

The terminal devices 120 and 130 may be mobile or fixed. Alternatively, the terminal device 120 may refer to an access terminal, a user equipment (UE), a subscriber unit, a subscriber station, a mobile station, a mobile platform, a remote station, a remote terminal, a mobile device, a terminal device, a terminal, a wireless communication device, a user agent, or a user apparatus. The access terminal may be a cellular telephone, a cordless telephone, a session initiation protocol (SIP) telephone, a wireless local loop (WLL) station, a personal digital assistant (PDA), a handheld device having a wireless communication function, a computing device or other processing device connected to a wireless modem, a vehicle-mounted device, a wearable device, a terminal device in a 5G network or a terminal device in a future evolved PLMN, etc.

In the following embodiments of the present disclosure, it will be described in detail how to perform multi-carrier communication in the sidelink.

### First Embodiment

With reference to FIG. 2, FIG. 2 illustrates a multi-carrier communication method for a sidelink according to the first embodiment of the present disclosure which includes the following operations.

At S210, a first terminal device determines a first carrier set based on first information. The first carrier set is a subset of a second carrier set used for sidelink communication.

At S220, the first terminal device performs an operation on a carrier in the first carrier set.

Alternatively, there is a correspondence between the first information and the first carrier set. The correspondence may be configured to the first terminal device in a pre-configuration manner, a network configuration manner or a configuration manner through signaling of a second terminal device.

Alternatively, the pre-configuration manner is described below.

The correspondence between the first information and the first carrier set is pre-configured in the first terminal device. Specifically, the correspondence may be pre-configured in a card (such as, a memory card) of the first terminal device.

Alternatively, the pre-configured correspondence between the first information and the first carrier set is configured to the first terminal device through signaling of a core network element. In the pre-configuration manner, the core network element sends signaling to the first terminal device, and the correspondence between the first information and the first carrier set is pre-configured to the first terminal through the signaling. Alternatively, the signaling sent by the core network element includes ManageUEPolicyCommand.

Alternatively, the network configuration manner is as follows. The correspondence between the first information and the first carrier set is configured to the first terminal device through a system message or dedicated radio resource control (RRC) signaling. In the pre-configuration manner, a network device sends a system message or dedicated RRC signaling to the first terminal device, and the correspondence between the first information and the first carrier set is configured to the first terminal device through the system message or the dedicated RRC signaling. Alternatively, the dedicated RRC signaling includes RRCReconfiguration signaling.

Alternatively, the configuration manner through the signaling of the second terminal device is as follows. The correspondence between the first information and the first carrier set is configured to the first terminal device through proximity communication 5 - RRC (PC5-RRC) signaling of the second terminal device. In this configuration manner, the PC5-RRC (RRC of the PC5 interface) signaling is sent from the second terminal device to the first terminal device, and the correspondence between the first information and the first carrier set is configured to the first terminal device through the PC5-RRC signaling. Alternatively, the second terminal device is a peer terminal device that performs sidelink communication with the first terminal device. Alternatively, the PC5-RRC signaling of the second terminal device includes the PC5-RRC signaling.

Alternatively, the first information includes part or all of at least one of the following information.

The first application identifier (ID), the first service ID, the first provider service identifier or the intelligent transportation system application identifier (PSID/ITS-AID), the first quality of service (QoS) attribute, the first layer 2 identifier (L2 ID), the first bearer, and the first logical channel. The first L2 ID includes an L2 ID of a source terminal device, and may also include an L2 ID of a destination terminal device or a peer terminal device. Alternatively, the first information may include at least one of the above information, and may only include a part of the at least one information. For example, the first information includes the first L2 ID, and if a length of the L2 ID is 24 bytes, only 16 bytes of the L2 ID can be used by the first information.

In the specific embodiment of the present disclosure, a set of sidelink carriers available to the first terminal device is the second carrier set. The terminal device uses the first information to screen the carriers in the second carrier set, and the screened carrier set is the first carrier set. Therefore, the first carrier set is a subset of the second carrier set. The first information may be used in different combinations of information to achieve different screening schemes for sidelink carriers available to the terminal device.

For example, if the first information uses identification-type information to screen the sidelink carriers, assuming that the sidelink carrier corresponding to the first application ID with a value of 1 is used as the first carrier set, and thus, when the first terminal device receives the information (including data, information, signals, etc.) and obtains the first application ID in the information, and if the first application ID is 1, the first terminal device only processes the information on the first carrier set. For example, the first terminal device only sends and receives the data on the first carrier set.

If the first information uses the Qos attribute to screen the sidelink carrier, at least one dimension of the Qos attribute is used as the screening condition, and different combinations of the dimension correspond to different first carrier sets. The dimension of the Qos attribute includes at least one of: PC5 QoS parameters, such as PC5 QoS identifier (PQI), PC5 flow bit rates, PC5 link aggregated bit rates, range and default values; PC5 QoS characteristics, such as resource type, priority level, packet delay budget, packet error rate, averaging window and maximum data burst volume.

If the first information uses a bearer or a logical channel to screen the sidelink carrier, then different bearers correspond to different first carrier sets, i.e., different packet data convergence protocol (PDCP) entities correspond to different first carrier sets; or, different logical channels may correspond to different first carrier sets, i.e., different radio link control (RLC) entities correspond to different first carrier sets.

Alternatively, the above mentioned information contained in the first information may be in an "and" relationship or in an "or" relationship. In the actual practice, the relationship among the above mentioned information contained in the first information is determined according to the needs. For example, if the first information includes the first application ID and the first service ID, the set of carriers corresponding to both the first application ID and the first service ID is the first carrier set. That is, the carrier in the first carrier set needs to correspond to both the first application ID and the first service ID. In another example, if the first information includes the first application ID or the first service ID, the carrier corresponding to the first application ID and the carrier corresponding to the first service ID together constitute the first carrier set. That is, the carrier in the first carrier set only needs to correspond to one of the first application ID and the first service ID.

Alternatively, at S220, the operation that the first terminal device performs an operation on the carrier in the first carrier set includes: the first terminal device detects the first message carried by the carrier in the first carrier set, and/or, the first terminal device sends the first message through the carrier in the first carrier set.

Alternatively, the first message includes at least one of: the first physical layer channel, such as PSCCH, physical sidelink feedback channel (PSFCH); the first media access control control element (MAC CE), such as sidelink CSI report; protocol data unit controlled by the first radio link control or the packet data convergence protocol (RLC/PDCP Control PDU), such as status report; the first PC5-RRC message; the first PC5-S message; or the first discovery message.

In the specific embodiment of the present disclosure, the first terminal device only detects the first message carried by the carrier in the first carrier set; and/or, the first message is sent through the carrier in the first carrier set. For example, when the first carrier set is used to carry the PSCCH and the PSFCH, i.e., the PSCCH and the PSFCH will only be triggered on the first carrier set, if the terminal device needs to receive corresponding information, the terminal device only needs to detect the first carrier set. Therefore, the power consumption of the first terminal device can be reduced.

Alternatively, at S220, the operation that the first terminal device performs an operation on the carrier in the first carrier set includes the operation that the first terminal device performs an operation on the first carrier set, which includes the following operation. The first terminal device detects the first carrier set to perform the first function.

Alternatively, the first function includes a measurement or detection function.

Alternatively, the measurement or detection function includes at least one of the followings:
- determining whether a radio link failure (RLF) occurs;
- performing reference signal reception power (RSRP) measurement on a sidelink of the second terminal device; the RSRP measurement may be used for the first terminal device to perform selection and reselection of a relay terminal device, or the RSRP measurement may be reported to the second terminal device (such as the peer terminal device) for the second terminal device to perform transmission power control;
- performing channel state information (CSI) measurement on the second terminal device; the CSI measurement may be reported to the second terminal device (such as the peer terminal device) for the second terminal device to perform transmission power control, modulation and coding mode selection, etc.; or
- performing beam measurement on the second terminal device; the beam measurement may be reported to the second terminal device (such as the peer terminal device) for the second terminal device to perform transmission beam selection.

Alternatively, the operation that the first terminal device detects the first carrier set to determine whether the RLF occurs includes the following operations.

The first terminal device detects the carrier in the first carrier set, and if a physical sidelink feedback channel (PSFCH) is not received, the first terminal device increases a value of a counter; and when the counter reaches a maximum value, the first terminal device determines that the RLF has occurred. Alternatively, the counter is reset if the PSFCH is received.

In an embodiment of the present disclosure, the first terminal device detects the first carrier set to perform the first function. For example, to determine whether RLF has occurred, it is sufficient to detect the first carrier set. Therefore, the power consumption of the first terminal device can be reduced.

Alternatively, in a case that licensed carrier(s) in the second carrier set constitute the first carrier set; then at S220, the operation that the first terminal device performs the operation on the carrier in the first carrier set includes that the first terminal device performs a transmission through the first carrier. When the unlicensed carrier has more interference and cannot obtain the transmission opportunity, the transmission quality will not be guaranteed. In a case that the at least one licensed carrier are screened out from the second carrier set as the first carrier set, and transmission is performed on the first carrier set, the transmission quality can be better guaranteed. Therefore, the embodiment of taking the at least one licensed carrier as the first carrier set can not only reduce the power consumption of the first terminal device, but also improve the transmission quality of the sidelink.

Alternatively, in a case that carrier(s) with a low congestion degree in the second carrier set constitute the first carrier set; then at S220, the operation that the first terminal device performs the operation on the carrier in the first carrier set includes that the first terminal device performs a transmission through the first carrier. The carriers in the second carrier set have different congestion degrees, and the carrier with a higher congestion degree cannot obtain more transmission opportunities, so that the transmission quality cannot be guaranteed. In a case that the carrier(s) with a low congestion degree is screened out from the second carrier set as the first carrier set, and transmission is performed on the first carrier set, the transmission quality can be better guaranteed. Therefore, the embodiment of taking the carrier with the low congestion degree as the first carrier set can not only reduce the power consumption of the first terminal device, but also improve the transmission quality of the sidelink.

Alternatively, the second carrier set corresponds to the second information. That is, the second carrier set may also be a carrier set that have been screened out in the same manner for sidelink transmission. Based on the second carrier set, the second screening operation is performed to screen out the first carrier set.

The second information includes part or all of at least one of: the second application identifier (ID), the second service ID, the second provider service identifier or the intelligent transportation system application identifier (PSID/ITS-AID), the second quality of service (QoS) attribute, the second layer 2 identifier (L2 ID), the second bearer, and the second logical channel. Alternatively, the second information may include at least one of the above information, and may only include a part of the at least one information. For example, the second information includes the second L2 ID, and if a length of the L2 ID is 24 bytes, only 16 bytes of the L2 ID can be used by the second information.

Alternatively, the above mentioned information contained in the second information may be in the "and" relationship or in the "or" relationship. In the actual practice, the relationship among the above mentioned information contained in the second information is determined according to the needs. For example, if the second information includes the second application ID and the second service ID, the set of carriers corresponding to both the second application ID and the second service ID is the second carrier set. That is, the carrier in the second carrier set needs to correspond to both the second application ID and the second service ID. In another example, if the second information includes the second application ID or the second service ID, the carrier corresponding to the second application ID and the carrier corresponding to the second service ID together constitute the second carrier set. That is, the carrier in the second carrier set only needs to correspond to one of the second application ID and the second service ID.

According to the first embodiment of the present disclosure, based on the first information, the first carrier set is selected from a carrier set available for the first terminal device to perform a sidelink transmission, and an operation is only performed on the carrier(s) in the first carrier set. Therefore, the number of carriers needed to be monitored in the working process of the first terminal device is reduced, thereby reducing power consumption of the first terminal device.

### Second Embodiment

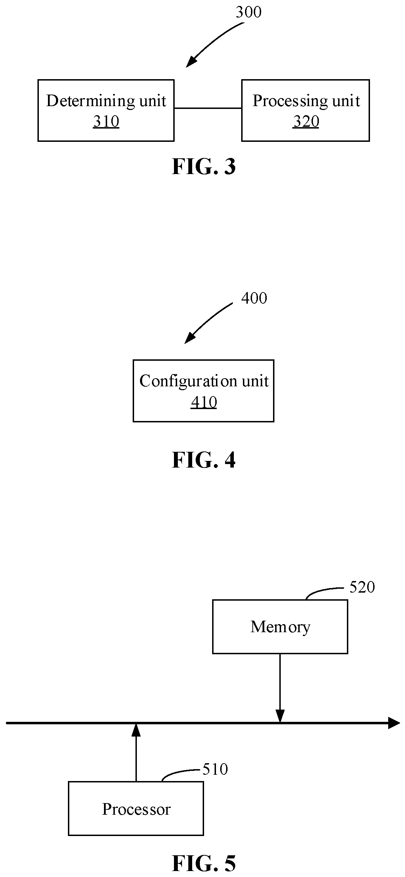

With reference to FIG. 3, a diagram of a structure of a multi-carrier communication apparatus 300 for a sidelink according to the second embodiment of the present disclosure is provided. The multi-carrier communication apparatus 300 can be the first terminal device in the first embodiment. The multi-carrier communication apparatus 300 includes a determining unit 310 and a processing unit 320.

The determining unit 310 is configured to determine a first carrier set based on first information. The first carrier set is a subset of a second carrier set for sidelink communication.

The processing unit 320 is configured to perform an operation on a carrier in the first carrier set.

Alternatively, a correspondence between the first information and the first carrier set is configured to the first terminal in a pre-configuration manner, a network configuration manner, or a configuration manner through signaling of a second terminal device.

Alternatively, the pre-configuration manner includes: pre-configuring the correspondence between the first information and the first carrier set in the multi-carrier communication apparatus or in a card of the multi-carrier communication apparatus; or configuring the pre-configured correspondence between the first information and the first carrier set to the multi-carrier communication apparatus through signaling of a core network element.

Alternatively, the signaling of the core network element includes ManageUEPolicyCommand.

Alternatively, the network configuration manner includes: configuring the correspondence between the first information and the first carrier set to the multi-carrier communication apparatus through a system message or dedicated radio resource control (RRC) signaling. Alternatively, the dedicated RRC signaling includes RRCReconfiguration signaling.

Alternatively, the configuration manner through the signaling of the second terminal device includes: configuring the correspondence between the first information and the first carrier set to the multi-carrier communication apparatus through proximity communication 5 - radio resource control (PC5-RRC) signaling of the second terminal device. Alternatively, the PC5-RRC signaling of the second terminal device includes PC5-RRC signaling.

Alternatively, the first information includes part or all of at least one of the following information.

A first application identifier (ID), a first service ID, a first provider service ID or an intelligent transportation system application ID (PSID/ITS-AID), a first quality of service (QoS) attribute, a first layer 2 ID (L2 ID), a first bearer, or a first logical channel.

Alternatively, the processing unit is specifically configured to detect a first message carried by the carrier in the first carrier set; and/or send, by the first terminal device, a first message through the carrier in the first carrier set.

Alternatively, the first message includes at least one of: a first physical layer channel, a first media access control control element (MAC CE), a protocol data unit controlled by a first radio link control or a packet data convergence protocol (RLC/PDCP Control PDU), a first proximity communication 5 - radio resource control (PC5-RRC) message, a first PC5-S message, or a first discovery message.

Alternatively, the processing unit is specifically configured to detect the first carrier set to complete a first function. Alternatively, the first function includes a measurement or detection function.

Alternatively, the measurement or detection function includes at least one of the following:
- determining whether a radio link failure (RLF) occurs;
- reference signal reception power (RSRP) measurement of a sidelink of a second terminal device;
- channel state information (CSI) measurement of a second terminal device; or
- beam measurement of a second terminal device.

Alternatively, the processing unit 320 is specifically configured to detect the carrier in the first carrier set; increase a value of a counter if a physical sidelink feedback channel (PSFCH) is not received; and determine that the RLF has occurred when the counter reaches a maximum value.

Alternatively, the processing unit 320 is further specifically configured to reset the counter if the PSFCH is not received.

Alternatively, in a case that the licensed carrier(s) in the second carrier set constitute the first carrier set, the processing unit 320 is specifically configured to perform a transmission through the first carrier.

Alternatively, in a case that the carrier(s) with a low congestion degree in the second carrier set constitute the first carrier set, the processing unit 320 is specifically configured to perform a transmission through the first carrier.

Alternatively, the second carrier set corresponds to second information. The second information includes at least one of: a second application identifier (ID), a second service ID, a second provider service ID or an intelligent transportation system application ID (PSID/ITS-AID), a second quality of service (QoS) attribute, a second layer 2 ID (L2 ID), a second bearer, or a second logical channel.

For parts not described in the second embodiment, reference may be made to the same or corresponding parts of the first embodiment and will not be repeated here.

### Third Embodiment

With reference to FIG. 4, which illustrates a diagram of a structure of a multi-carrier communication apparatus 400 for a sidelink according to the third embodiment of the present disclosure, the multi-carrier communication apparatus 400 may be the network device, the second terminal device, the core network element or the like according to the first embodiment. The multi-carrier communication apparatus 400 includes a configuration unit 410.

The configuration unit 410 is to configure for a first terminal device a correspondence between first information and a first carrier set, causing the first terminal device to determine the first carrier set based on the first information and to perform an operation on a carrier in the first carrier set. The first carrier set is a subset of a second carrier set for sidelink communication.

Alternatively, the configuration unit 410 being configured to configure a correspondence between first information and a first carrier set for a first terminal device includes the following operation.

The configuration unit 410 is specifically to configure the correspondence between the first information and the first carrier set to the first terminal device in a pre-configuration manner, a network configuration manner or a configuration manner through signaling of a second terminal device.

Alternatively, the pre-configuration manner includes: pre-configuring the correspondence between the first information and the first carrier set in the first terminal device or in a card of the first terminal device; or configuring the pre-configured correspondence between the first information and the first carrier set to the first terminal device through signaling of a core network element.

Alternatively, the signaling of the core network element includes ManageUEPolicyCommand.

Alternatively, the network configuration manner includes: configuring the correspondence between the first information and the first carrier set to the first terminal device through a system message or specific radio resource control (RRC) signaling.

Alternatively, the specific RRC signaling includes RRCReconfiguration signaling.

Alternatively, the configuration manner through the signaling of the second terminal device includes: configuring the correspondence between the first information and the first carrier set to the first terminal device through proximity communication 5 - radio resource control (PC5-RRC) signaling of the second terminal device.

Alternatively, the PC5-RRC signaling of the second terminal device includes PC5-RRC signaling.

Alternatively, the first information includes part or all of at least one of: a first application identifier (ID), a first service ID, a first provider service ID or an intelligent transportation system application ID (PSID/ITS-AID), a first quality of service (QoS) attribute, a first layer 2 ID (L2 ID), a first bearer, or a first logical channel.

Alternatively, performing, by the first terminal device, the operation on the first carrier set includes: detecting, by the first terminal device, a first message carried by the carrier in the first carrier set; and/or sending, by the first terminal device, a first message through the carrier in the first carrier set.

Alternatively, the first message includes at least one of: a first physical layer channel, a first media access control control element (MAC CE), a protocol data unit controlled by a first radio link control or a packet data convergence protocol (RLC/PDCP Control PDU), a first proximity communication 5 - radio resource control (PC5-RRC) message, a first PC5-S message, or a first discovery message.

Alternatively, performing, by the first terminal device, the operation on the first carrier set includes: detecting, by the first terminal device, the first carrier set to perform a first function. Alternatively, the first function includes a measurement or detection function.

Alternatively, the measurement or detection function includes at least one of:
- determining whether a radio link failure (RLF) occurs;
- reference signal reception power (RSRP) measurement of a sidelink of a second terminal device;
- channel state information (CSI) measurement of a second terminal device; or
- beam measurement of a second terminal device.

Alternatively, the operation that the first terminal device detects the first carrier set to determine whether the RLF occurs includes the following operations.

The first terminal device detects the carrier in the first carrier set, if a physical sidelink feedback channel (PSFCH) is not received, the first terminal device increases a value of a counter; and when the counter reaches a maximum value, the first terminal device determines that the RLF has occurred. Alternatively, the counter is reset the PSFCH is received.

Alternatively, the licensed carrier(s) in the second carrier set constitute the first carrier set, and the operation that the first terminal device performs the operation on the first carrier set includes that the first terminal device performs a transmission through the first carrier.

Alternatively, the carrier(s) with a low congestion degree in the second carrier set constitute the first carrier set, and the operation that the first terminal device performs the operation on the first carrier set includes that the first terminal device performs a transmission through the first carrier.

Alternatively, the second carrier set corresponds to the second information. The second information includes at least one of: the second application identifier (ID), the second service ID, the second provider service identifier or the intelligent transportation system application identifier (PSID/ITS-AID), the second quality of service (QoS) attribute, the second layer 2 identifier (L2 ID), the second bearer, and the second logical channel.

For parts not described in the third embodiment, reference may be made to the same or corresponding parts of the first embodiment and will not be repeated here.

### Fourth Embodiment

With reference to FIG. 5, which illustrates a diagram of a structure of a multi-carrier communication apparatus 500 for a sidelink according to fourth embodiment of the present disclosure, the multi-carrier communication apparatus 500 includes a processor 510 and a memory 520. The processor 510 and the memory 520 communicate with each other through a bus system.

The memory 520 is a computer-readable storage medium having stored thereon a program executable on the processor 510. The processor 510 invokes a program in the memory 520 to execute the corresponding flows in the multi-carrier communication method for the sidelink according to the first embodiment.

The processor 510 may be a single component or may be a generic designation of multiple processing elements. For example, the processor 510 may be a center processing unit (CPU), an application specific integrated circuit (ASIC), or one or more integrated circuits configured to implement the above method, such as at least one microprocessor (e.g., digital signal processor, DSP), or at least one programmable gate array (e.g., field programmable gate array, FPGA), etc.

Those skilled in the art will appreciate that in one or more of the above examples, the functionalities described in the particular embodiments of the present disclosure may be implemented in whole or in part by software, hardware, firmware or any combination thereof. When implemented in software, it can be implemented by the processor executing software instructions. Software instructions may be composed of corresponding software modules. The software module may be stored in a computer-readable storage medium, which may be any usable medium accessible to a computer or a data storage device such as a data center or a server containing one or more usable media integration, etc. The usable media may be magnetic media (e.g., floppy disk, hard disk, magnetic tape), optical media (e.g., digital video disc (DVD)), or semiconductor media (e.g., solid state disk (SSD)), etc. The computer readable storage media include, but are not limited to, a random access memory (RAM), a flash memory, a read only memory (ROM), an erasable programmable ROM (EPROM), an electrically EPROM (EEPROM), a register, a hard disk, a removable hard disk, a compact disc read-only memory (CD-ROM), or any other form of storage media well known in the art. An exemplary computer-readable storage medium is coupled to a processor such that the processor can read information from and write information to the computer-readable storage medium. Of course, the computer-readable storage medium can also be part of the processor. The processor and the computer readable storage medium may be located in the ASIC. In addition, the ASIC may be located in an access network device, a target network device, or a core network device. Of course, the processor and the computer readable storage medium may also exist as discrete components in the access network device, the target network device, or the core network device. When implemented in software, it can also be implemented in whole or in part in the form of a computer program product. The computer program product includes one or more computer instructions. When the computer program instructions are loaded and executed on a computer or a chip, the flow or function described in accordance with the specific embodiments of the present disclosure is generated in whole or in part. The computer may be a general purpose computer, a special purpose computer, a computer network, or other programmable apparatuses. The computer program instructions may be stored in the above-mentioned computer-readable storage medium or transmitted from one computer-readable storage medium to another. For example, the computer instructions may be transmitted from one website site, computer, server or data center to another website site, computer, server or data center via wired (e.g., coaxial cable, optical fiber, digital subscriber line (DSL)) or wireless (e.g., infrared, wireless, microwave, etc.).

The above embodiments are illustrative but not limiting of the present disclosure and a number of alternative examples can be devised by those skilled in the art within the scope of the claims. Those skilled in the art will appreciate that the present disclosure is not limited to the precise structure already described above and illustrated in the appended drawings, and that appropriate adjustments, modifications, equivalents, improvements, etc. may be made to specific implementations as long as there is no violation of the present disclosure as defined in the appended claims. Accordingly, any modifications and variations made in accordance with the concept and principles of the present disclosure are within the scope of the present disclosure as defined by the appended claims.

A first example provides a multi-carrier communication method for a sidelink, comprising: determining, by a first user equipment (UE), a first carrier set based on first information, wherein the first carrier set is a subset of a second carrier set for sidelink communication; and performing, by the first UE, an operation on a carrier in the first carrier set.

In a second example according to the first example, a correspondence between the first information and the first carrier set is configured to the first UE in a pre-configuration manner, a network configuration manner, or a configuration manner through signaling of a second UE.

In a third example according to the second example, the pre-configuration manner includes: pre-configuring the correspondence between the first information and the first carrier set in the first UE or in a card of the first UE; or configuring pre-configured correspondence between the first information and the first carrier set to the first UE through signaling of a core network element.

In a fourth example according to the third example, the signaling of the core network element comprises ManageUEPolicyCommand.

In a fifth example according to the second example, the network configuration manner includes: configuring the correspondence between the first information and the first carrier set to the first UE through a system message or dedicated radio resource control (RRC) signaling.

In a sixth example according to the fifth example, the dedicated RRC signaling comprises RRCReconfiguration signaling.

In a seventh example according to the second example, the configuration manner through the signaling of the second UE includes: configuring the correspondence between the first information and the first carrier set to the first UE through proximity communication 5 - radio resource control (PC5-RRC) signaling of the second UE.

In an eighth example according to the seventh example, the PC5-RRC signaling of the second UE comprises PC5-RRC signaling.

In a ninth example according to any one of the first example to the eighth example, the first information comprises part or all of at least one of: a first application identifier (ID), a first service ID, a first provider service ID or an intelligent transportation system application ID (PSID/ITS-AID), a first quality of service (QoS) attribute, a first layer 2 ID (L2 ID), a first bearer, or a first logical channel.

In a tenth example according to any one of the first example to the ninth example, the performing, by the first UE, the operation on the first carrier set comprises: detecting, by the first UE, a first message carried by the carrier in the first carrier set; and/or sending, by the first UE, a first message through the carrier in the first carrier set.

In an eleventh example according to the tenth example, the first message comprises at least one of: a first physical layer channel, a first media access control control element (MAC CE), a protocol data unit controlled by a first radio link control or a packet data convergence protocol (RLC/PDCP Control PDU), a first proximity communication 5 - radio resource control (PC5-RRC) message, a first PC5-S message, or a first discovery message.

In a twelfth example according to any one of the first example to the ninth example, the performing, by the first UE, the operation on the first carrier set comprises: detecting, by the first UE, the first carrier set to perform a first function.

In a thirteenth example according to the twelfth example, the first function comprises a measurement or detection function.

In a fourteenth example according to the thirteenth example, the measurement or detection function comprises at least one of: determining whether a radio link failure (RLF) occurs; performing reference signal reception power (RSRP) measurement on a sidelink of a second UE; performing channel state information (CSI) measurement on a second UE; or performing beam measurement on a second UE.

In a fifteenth example according to the fourteenth example, the detecting, by the first UE, the first carrier set to determine whether the RLF occurs comprises: detecting, by the first UE, the carrier in the first carrier set; increasing, by the first UE, a value of a counter if a physical sidelink feedback channel (PSFCH) is not received; and determining, by the first UE, that the RLF has occurred when the counter reaches a maximum value.

In a sixteenth example according to the fifteenth example, the detecting, by the first UE, the first carrier set to determine whether the RLF occurs further comprises: resetting the counter if the PSFCH is received.

In a seventeenth example according to any one of the first example to the sixteenth example, licensed carrier(s) in the second carrier set constitute the first carrier set, and the performing, by the first UE, the operation on the first carrier set comprises: performing, by the first UE, a transmission through the first carrier.

In an eighteenth example according to any one of the first example to the sixteenth example, carrier(s) with a low congestion degree in the second carrier set constitute the first carrier set, and wherein the performing, by the first UE, the operation on the first carrier set comprises: performing, by the first UE, a transmission through the first carrier.

In a nineteenth example according to any one of the first example to the eighteenth example, the second carrier set corresponds to second information, and the second information comprises all or part of at least one of: a second application identifier (ID), a second service ID, a second provider service ID or an intelligent transportation system application ID (PSID/ITS-AID), a second quality of service (QoS) attribute, a second layer 2 ID (L2 ID), a second bearer, or a second logical channel.

A twentieth example provides a multi-carrier communication method for a sidelink, comprising: configuring a correspondence between first information and a first carrier set for a first user equipment (UE), causing the first UE to determine the first carrier set based on the first information and to perform an operation on a carrier in the first carrier set, wherein the first carrier set is a subset of a second carrier set for sidelink communication.

In a twenty-first example according to the twentieth example, the correspondence between the first information and the first carrier set is configured to the first UE in a pre-configuration manner, a network configuration manner, or a configuration manner through signaling of a second UE.

In a twenty-second example according to the twenty-first example, the pre-configuration manner includes: pre-configuring the correspondence between the first information and the first carrier set in the first UE or in a card of the first UE; or configuring pre-configured correspondence between the first information and the first carrier set to the first UE through signaling of a core network element.

In a twenty-third example according to the twenty-second example, the signaling of the core network element comprises ManageUEPolicyCommand.

In a twenty-fourth example according to the twenty-first example, the network configuration manner includes: configuring the correspondence between the first information and the first carrier set to the first UE through a system message or dedicated radio resource control (RRC) signaling.

In a twenty-fifth example according to the twenty-fourth example, the dedicated RRC signaling comprises RRCReconfiguration signaling.

In a twenty-sixth example according to the twenty-first example, the configuration manner through the signaling of the second UE includes: configuring the correspondence between the first information and the first carrier set to the first UE through proximity communication 5 - radio resource control (PC5-RRC) signaling of the second UE.

In a twenty-seventh example according to the twenty-sixth example, the PC5-RRC signaling of the second UE comprises PC5-RRC signaling.

In a twenty-eighth example according to any one of the twentieth example to the twenty-seventh example, the first information comprises part or all of at least one of: a first application identifier (ID), a first service ID, a first provider service ID or an intelligent transportation system application ID (PSID/ITS-AID), a first quality of service (QoS) attribute, a first layer 2 ID (L2 ID), a first bearer, or a first logical channel.

In a twenty-ninth example according to any one of the twentieth example to the twenty-eighth example, the performing, by the first UE, the operation on the first carrier set comprises: detecting, by the first UE, a first message carried by the carrier in the first carrier set; and/or sending, by the first UE, a first message through the carrier in the first carrier set.

In a thirtieth example according to the twenty-ninth example, the first message comprises at least one of: a first physical layer channel, a first media access control control element (MAC CE), a protocol data unit controlled by a first radio link control or a packet data convergence protocol (RLC/PDCP Control PDU), a first proximity communication 5 - radio resource control (PC5-RRC) message, a first PC5-S message, or a first discovery message.

In a thirty-first example according to any one of the twentieth example to the twenty-eighth example, the performing, by the first UE, the operation on the first carrier set comprises: detecting, by the first UE, the first carrier set to perform a first function.

In a thirty-second example according to the thirty-first example, the first function comprises a measurement or detection function.

In a thirty-third example according to the thirty-second example, the measurement or detection function comprises at least one of: determining whether a radio link failure (RLF) occurs; performing reference signal reception power (RSRP) measurement on a sidelink of a second UE; performing channel state information (CSI) measurement on a second UE; or performing beam measurement on a second UE.

In a thirty-fourth example according to the thirty-third example, the detecting, by the first UE, the first carrier set to determine whether the RLF occurs comprises: detecting, by the first UE, the carrier in the first carrier set; increasing, by the first UE, a value of a counter if a physical sidelink feedback channel (PSFCH) is not received; and determining, by the first UE, that the RLF has occurred when the counter reaches a maximum value.

In a thirty-fifth example according to the thirty-fourth example, the detecting, by the first UE, the first carrier set to determine whether the RLF occurs further comprises: resetting the counter if the PSFCH is received.

In a thirty-sixth example according to any one of the twentieth example to the thirty-fifth example, licensed carrier(s) in the second carrier set constitute the first carrier set, and wherein performing, by the first UE, the operation on the first carrier set comprises: performing, by the first UE, a transmission through the first carrier.

In a thirty-seventh example according to any one of the twentieth example to the thirty-fifth example, carrier(s) with a low congestion degree in the second carrier set constitute the first carrier set, and wherein performing, by the first UE, the operation on the first carrier set comprises: performing, by the first UE, a transmission through the first carrier.

In a thirty-eighth example according to any one of the twentieth example to the thirty-seventh example, the second carrier set corresponds to second information, and the second information comprises all or part of at least one of: a second application identifier (ID), a second service ID, a second provider service ID or an intelligent transportation system application ID (PSID/ITS-AID), a second quality of service (QoS) attribute, a second layer 2 ID (L2 ID), a second bearer, or a second logical channel.

A thirty-ninth example provides a multi-carrier communication apparatus for a sidelink, comprising: a determining unit, configured to determine a first carrier set based on first information, wherein the first carrier set is a subset of a second carrier set for sidelink communication; and a processing unit, configured to perform an operation on a carrier in the first carrier set.

In a fortieth example according to the thirty-ninth example, a correspondence between the first information and the first carrier set is configured to a first user equipment (UE) in a pre-configuration manner, a network configuration manner, or a configuration manner through signaling of a second UE.

In a forty-first example according to the fortieth example, the pre-configuration manner include: pre-configuring the correspondence between the first information and the first carrier set in the multi-carrier communication apparatus or in a card of the multi-carrier communication apparatus; or configuring pre-configured correspondence between the first information and the first carrier set to the multi-carrier communication apparatus through signaling of a core network element.

In a forty-second example according to the forty-first example, the signaling of the core network element comprises ManageUEPolicyCommand.

In a forty-third example according to the fortieth example, the network configuration manner includes: configuring the correspondence between the first information and the first carrier set to the multi-carrier communication apparatus through a system message or dedicated radio resource control (RRC) signaling.

In a forty-fourth example according to the forty-third example, the dedicated RRC signaling comprises RRCReconfiguration signaling.

In a forty-fifth example according to the fortieth example, the configuration manner through the signaling of the second UE includes: configuring the correspondence between the first information and the first carrier set to the multi-carrier communication apparatus through proximity communication 5 - radio resource control (PC5-RRC) signaling of the second UE.

In a forty-sixth example according to the forty-fifth example, the PC5-RRC signaling of the second UE comprises PC5-RRC signaling.

In a forty-seventh example according to any one of the thirty-ninth example to the forty-sixth example, the first information comprises part or all of at least one of: a first application identifier (ID), a first service ID, a first provider service ID or an intelligent transportation system application ID (PSID/ITS-AID), a first quality of service (QoS) attribute, a first layer 2 ID (L2 ID), a first bearer, or a first logical channel.

In a forty-eighth example according to any one of the thirty-ninth example to the forty-seventh example, the processing unit is configured to detect a first message carried by the carrier in the first carrier set, and/or send a first message through the carrier in the first carrier set.

In a forty-ninth example according to the forty-eighth example, the first message comprises at least one of: a first physical layer channel, a first media access control control element (MAC CE), a protocol data unit controlled by a first radio link control or a packet data convergence protocol (RLC/PDCP Control PDU), a first proximity communication 5 - radio resource control (PC5-RRC) message, a first PC5-S message, or a first discovery message.

In a fiftieth example according to any one of the thirty-ninth example to the forty-seventh example, the processing unit is configured to detect the first carrier set to perform a first function.

In a fifty-first example according to the fiftieth example, the first function comprises a measurement or detection function.

In a fifty-second example according to the fifty-first example, the measurement or detection function comprises at least one of: determining whether a radio link failure (RLF) occurs; performing reference signal reception power (RSRP) measurement on a sidelink of a second UE; performing channel state information (CSI) measurement on a second UE; or performing beam measurement on a second UE.

In a fifty-third example according to the fifty-second example, the processing unit is configured to: detect the carrier in the first carrier set; increase a value of a counter if a physical sidelink feedback channel (PSFCH) is not received; and determine that the RLF has occurred when the counter reaches a maximum value.

In a fifty-fourth example according to the fifty-third example, the processing unit is further configured to reset the counter if the PSFCH is received.

In a fifty-fifth example according to any one of the thirty-ninth example to the fifty-fourth example, licensed carrier(s) in the second carrier set constitute the first carrier set, and the processing unit is configured to perform a transmission through the first carrier.

In a fifty-sixth example according to any one of the thirty-ninth example to the fifty-fourth example, carrier (s) with a low congestion degree in the second carrier set constitute the first carrier set, and the processing unit is configured to perform a transmission through the first carrier.

In a fifty-seventh example according to any one of the thirty-ninth example to the fifty-sixth example, the second carrier set corresponds to second information, and the second information comprises all or part of at least one of: a second application identifier (ID), a second service ID, a second provider service ID or an intelligent transportation system application ID (PSID/ITS-AID), a second quality of service (QoS) attribute, a second layer 2 ID (L2 ID), a second bearer, or a second logical channel.

A fifty-eighth example provides a multi-carrier communication apparatus for a sidelink, comprising: a configuration unit, arranged to configure a correspondence between first information and a first carrier set for a first user equipment (UE), causing the first UE to determine the first carrier set based on the first information and to perform an operation on a carrier in the first carrier set, wherein the first carrier set is a subset of a second carrier set for sidelink communication.

In a fifty-ninth example according to the fifty-eight example, the configuration unit being arranged to configure the correspondence between first information and the first carrier set for the first UE comprises: the configuration unit being arranged to configure the correspondence between the first information and the first carrier set to the first UE in a pre-configuration manner, a network configuration manner or a configuration manner through signaling of a second UE.

In a sixtieth example according to the fifty-ninth example, the pre-configuration manner includes: pre-configuring the correspondence between the first information and the first carrier set in the first UE or in a card of the first UE; or configuring the pre-configured correspondence between the first information and the first carrier set to the first UE through signaling of a core network element.

In a sixty-first example according to the sixtieth example, the signaling of the core network element comprises ManageUEPolicyCommand.

In a sixty-second example according to the fifty-ninth example, the network configuration manner includes: configuring the correspondence between the first information and the first carrier set to the first UE through a system message or dedicated radio resource control (RRC) signaling.

In a sixty-third example according to the sixth-second example, the dedicated RRC signaling comprises RRCReconfiguration signaling.

In a sixty-fourth example according to the fifty-ninth example, the configuration manner through the signaling of the second UE includes: configuring the correspondence between the first information and the first carrier set to the first UE through proximity communication 5 - radio resource control (PC5-RRC) signaling of the second UE.

In a sixty-fifth example according to the sixty-fourth example, the PC5-RRC signaling of the second UE comprises PC5-RRC signaling.

In a sixty-sixth example according to any one of the fifty-eighth example to the sixty-fifth example, the first information comprises part or all of at least one of: a first application identifier (ID), a first service ID, a first provider service ID or an intelligent transportation system application ID (PSID/ITS-AID), a first quality of service (QoS) attribute, a first layer 2 ID (L2 ID), a first bearer, or a first logical channel.

In a sixty-seventh example according to any one of the fifty-eighth example to the sixty-sixth example, the first UE performing the operation on the first carrier set comprises: detecting, by the first UE, a first message carried by the carrier in the first carrier set; and/or sending, by the first UE, a first message through the carrier in the first carrier set.

In a sixty-eighth example according to the sixty-seventh example, the first message comprises at least one of: a first physical layer channel, a first media access control control element (MAC CE), a protocol data unit controlled by a first radio link control or a packet data convergence protocol (RLC/PDCP Control PDU), a first proximity communication 5 - radio resource control (PC5-RRC) message, a first PC5-S message, or a first discovery message.

In a sixty-ninth example according to any one of the fifty-eighth example to the sixty-sixth example, the first UE performing the operation on the first carrier set comprises: detecting, by the first UE, the first carrier set to perform a first function.

In a seventieth example according to the sixty-ninth example, the first function comprises a measurement or detection function.

In a seventy-first example according to the seventieth example, the measurement or detection function comprises at least one of: determining whether a radio link failure (RLF) occurs; performing reference signal reception power (RSRP) measurement on a sidelink of a second UE; performing channel state information (CSI) measurement on a second UE; or performing beam measurement on a second UE.

In a seventy-second example according to the seventy-first example, the first UE detecting the first carrier set to determine whether the RLF occurs comprises: detecting, by the first UE, the carrier in the first carrier set; increasing, by the first UE, a value of a counter if a physical sidelink feedback channel (PSFCH) is not received; and determining, by the first UE, that the RLF has occurred when the counter reaches a maximum value.

In a seventy-third example according to the seventy-second example, the first UE detecting the first carrier set to determine whether the RLF occurs further comprises: resetting the counter if the PSFCH is received.

In a seventy-fourth example according to any one of the fifty-eighth example to the seventy-third example, licensed carrier(s) in the second carrier set constitute the first carrier set, and wherein performing, by the first UE, the operation on the first carrier set comprises: performing, by the first UE, a transmission through the first carrier.

In a seventy-fifth example according to any one of the fifty-eighth example to the seventy-third example, carrier(s) with a low congestion degree in the second carrier set constitute the first carrier set, and wherein performing, by the first UE, the operation on the first carrier set comprises: performing, by the first UE, a transmission through the first carrier.

In a seventy-sixth example according to any one of the fifty-eighth example to the seventy-fifth example, the second carrier set corresponds to second information, and the second information comprises all or part of at least one of: a second application identifier (ID), a second service ID, a second provider service ID or an intelligent transportation system application ID (PSID/ITS-AID), a second quality of service (QoS) attribute, a second layer 2 ID (L2 ID), a second bearer, or a second logical channel.

A seventy-seventh example provides a multi-carrier communication apparatus for a sidelink, comprising a processor and a memory, wherein the processor is configured to invoke a program in the memory to perform the multi-carrier communication method for the sidelink of any one of the first example to the thirty-eighth example.

A seventy-eighth example provides a chip comprising: a processor for invoking and running a computer program from a memory, to cause a device installed with the chip to perform the multi-carrier communication method for the sidelink of any one of any one of the first example to the thirty-eighth example.

A seventy-ninth example provides a computer-readable storage medium having stored thereon a program for an uplink transmission method that, when executed by a processor, performs the multi-carrier communication method for the sidelink of any one of the first example to the thirty-eighth example.

An eightieth example provides a computer program product, wherein the computer program product is stored on a non-transitory computer-readable storage medium and performs, when executed, the multi-carrier communication method for the sidelink of any one of the first example to the thirty-eighth example.

## Claims

1. A multi-carrier communication method for a sidelink, comprising:
determining (S210), by a first user equipment, UE, a first carrier set based on first information, wherein the first carrier set is a subset of a second carrier set for sidelink communication; and
performing (S220), by the first UE, an operation on a carrier in the first carrier set.

2. The multi-carrier communication method of claim 1, wherein a correspondence between the first information and the first carrier set is configured to the first UE in a pre-configuration manner, a network configuration manner, or a configuration manner through signaling of a second UE.

3. The multi-carrier communication method of claim 2, wherein the configuration manner through the signaling of the second UE includes: configuring the correspondence between the first information and the first carrier set to the first UE through proximity communication 5 - radio resource control, PC5-RRC, signaling of the second UE, and
wherein the PC5-RRC signaling of the second UE comprises PC5-RRC signaling.

4. The multi-carrier communication method of any one of claims 1 to 3, wherein performing (S220), by the first UE, the operation on the carrier in the first carrier set comprises:
detecting, by the first UE, a first message carried by the carrier in the first carrier set; and/or
sending, by the first UE, a first message through the carrier in the first carrier set.

5. The multi-carrier communication method of claim 4, wherein the first message comprises at least one of:
a first physical layer channel, a first media access control control element, MAC CE, a protocol data unit controlled by a first radio link control or a packet data convergence protocol, RLC/PDCP Control PDU, a first proximity communication 5 - radio resource control, PC5-RRC, message, a first PC5-S message, or a first discovery message.

6. The multi-carrier communication method of any one of claims 1 to 5, wherein carrier(s) with a low congestion degree in the second carrier set constitute the first carrier set, and
wherein performing, by the first UE, the operation on the carrier in the first carrier set comprises: performing, by the first UE, a transmission through the carrier in the first carrier.

7. A multi-carrier communication apparatus (300) for a sidelink, comprising:
a determining unit (310), configured to determine a first carrier set based on first information, wherein the first carrier set is a subset of a second carrier set for sidelink communication; and
a processing unit (320), configured to perform an operation on a carrier in the first carrier set.

8. The multi-carrier communication apparatus (300) of claim 7, wherein the processing unit (320) is configured to detect the first carrier set to perform a first function.

9. The multi-carrier communication apparatus (300) of claim 8, wherein the first function comprises a measurement or detection function,
wherein the measurement or detection function comprises at least one of:
determining whether a radio link failure, RLF, occurs;
performing reference signal reception power, RSRP, measurement on a sidelink of a second user equipment, UE;
performing channel state information, CSI, measurement on a second UE; or
performing beam measurement on a second UE.

10. The multi-carrier communication apparatus (300) of claim 9, wherein the processing unit (320) is configured to: detect the carrier in the first carrier set; increase a value of a counter if a physical sidelink feedback channel, PSFCH, is not received; and determine that the RLF has occurred when the counter reaches a maximum value,
wherein the processing unit (320) is further configured to reset the counter if the PSFCH is received.

11. A multi-carrier communication apparatus (400) for a sidelink, comprising:
a configuration unit (410), arranged to configure a correspondence between first information and a first carrier set for a first user equipment, UE, causing the first UE to determine the first carrier set based on the first information and to perform an operation on a carrier in the first carrier set, wherein the first carrier set is a subset of a second carrier set for sidelink communication.

12. The multi-carrier communication apparatus (400) of claim 11, wherein the configuration unit being arranged to configure the correspondence between first information and the first carrier set for the first UE comprises:
the configuration unit being arranged to configure the correspondence between the first information and the first carrier set to the first UE in a pre-configuration manner, a network configuration manner or a configuration manner through signaling of a second UE.

13. The multi-carrier communication apparatus (400) of claim 12, wherein the network configuration manner includes: configuring the correspondence between the first information and the first carrier set to the first UE through a system message or dedicated radio resource control (RRC) signaling,
wherein the dedicated RRC signaling comprises RRCReconfiguration signaling.

14. The multi-carrier communication apparatus (400) of any one of claims 11 to 13, wherein the first information comprises part or all of at least one of:
a first application identifier, ID, a first service ID, a first provider service ID or an intelligent transportation system application ID, PSID/ITS-AID, a first quality of service, QoS, attribute, a first layer 2 ID, L2 ID, a first bearer, or a first logical channel.

15. A chip comprising: a processor for invoking and running a computer program from a memory, to cause a device installed with the chip to perform the multi-carrier communication method for the sidelink of any one of claims 1 to 6.
